Europäisches Patentamt

European Patent Office

Office européen des brevets

(19)

(11) Numéro de publication: **0 258 132**
**B1**

(12) **FASCICULE DE BREVET EUROPEEN**

(45) Date de publication du fascicule du brevet:
24.10.90

(51) Int. Cl.⁵: **H02K 5/14**, H01R 39/40

(21) Numéro de dépôt: 87401870.8

(22) Date de dépôt: 12.08.87

(54) Dispositif porte-balais pour machine électrique tournante, et machine électrique équipée d'un tel dispositif porte-balais.

(30) Priorité: 22.08.86 FR 8611990

(43) Date de publication de la demande:
02.03.88 Bulletin 88/9

(45) Mention de la délivrance du brevet:
24.10.90 Bulletin 90/43

(84) Etats contractants désignés:
DE ES IT

(56) Documents cités:
DE-A- 2 724 520
DE-C- 340 915
FR-A- 1 522 538
FR-A- 1 576 799
FR-A- 2 159 265
FR-A- 2 344 151
US-A- 1 706 255
US-A- 2 842 693
US-A- 3 656 018

(73) Titulaire: VALEO TERMICO, Poligono Industriale
No. 2 Calle del Moli, E-08100 Martorellas(ES)

(72) Inventeur: Gagneux, Georges Claude, 1, Lotissement
Mignon, F-86100 Chatellerault(FR)

(74) Mandataire: Michardière, Bernard et al, C/O CABINET
PEUSCET 68, rue d'Hauteville, F-75010 Paris(FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

L'invention est relative à un dispositif porte-balais pour machine électrique tournante à collecteur, du genre de ceux qui comprennent un support en forme de plaque dont le plan moyen est destiné à être maintenu sensiblement orthogonalement à l'axe de la machine, ce support comportant une ouverture centrale pour le passage du collecteur, et au moins deux évidements s'étendant radialement à partir de l'ouverture centrale vers l'extérieur, l'extrémité externe de ces évidements étant fermée, les bords orientés radialement, de chaque évidement, étant destinés à servir de guidage à un balai associé qui comporte, en général, des gorges dans lesquelles sont engagés les susdits bords, les balais de polarité électrique opposée étant isolés électriquement l'un de l'autre.

Un dispositif porte-balais de ce genre est connu, par exemple, d'après DE-A-27 24 520..

L'invention a pour but, surtout, de rendre les dispositifs porte-balais, du genre en question, tels qu'ils répondent mieux que jusqu'à présent aux diverses exigences de la pratique, dans le cas où de tels dispositifs comportent au moins quatre balais, le support comportant au moins quatre évidements. On souhaite, en particulier, que ces dispositifs assurent un bon guidage des balais, tout en restant d'un encombrement réduit, et tout en offrant une bonne isolation électrique entre les balais de polarité opposée. Il est souhaitable, en outre, que ces dispositifs porte-balais restent d'une fabrication simple, de coût réduit, et soient d'un montage aisé dans la machine électrique tournante.

Selon l'invention, un dispositif porte-balais du genre défini précédemment et qui comporte au moins quatre balais, les balais successifs ayant des polarités opposées, alors que le support comporte au moins quatre évidements, est caractérisé par le fait que le support comporte au moins trois secteurs métalliques sensiblement coplanaires, séparés l'un de l'autre dans lesquels sont prévues quatre échancrures dont les bords métalliques constituent des organes de guidage des balais, deux de ces secteurs étant reliés à des conducteurs électriques destinés au branchement des deux pôles opposés, tandis que le ou les autres secteurs métalliques sont séparés et isolés de ces deux premiers secteurs, chaque balai étant relié électriquement, par un conducteur souple, à un point de celui des deux premiers secteurs considérés, ayant la même polarité que le balai, des moyens isolants de maintien et d'assemblage des secteurs métalliques étant prévus, les susdits bords de guidage orientés radialement faisant saillie transversalement par rapport aux moyens isolants.

Avantageusement, chaque balai est relié électriquement par un conducteur souple, notamment une tresse, au secteur métallique associé, une extrémité du conducteur souple étant fixée sur le balai, tandis que l'autre extrémité est fixée sur le secteur métallique. La longueur du conducteur souple est suffisante pour permettre de dégager complètement le balai des bords de guidage ou pou l'enfiler sur ces bords.

De préférence, les secteurs métalliques plats du support sont munis, sur leurs deux faces, de matière isolante, des zones de ces secteurs métalliques restant apparentes, notamment pour permettre d'effectuer des branchements électriques.

De préférence, les deux secteurs reliés aux pôles opposés ont une étendue angulaire suffisante pour permettre le branchement électrique des balais de même polarité à l'aide de conducteurs souples de longueur relativement réduite ; dans le cas d'un montage à quatre balais, régulièrement répartis à 90°, chaque secteur métallique relié à un pôle s'étend sur un peu plus de 180°, les deux secteurs ayant une plage angulaire commune dans laquelle l'un des secteurs est situé radialement à l'extérieur par rapport à l'autre, l'un au moins des points d'attache sur l'un des secteurs métalliques, pour les conducteurs souples des balais, étant situé radialement à une distance de l'axe différente de celle des autres points d'attache, notamment à une distance supérieure ; en outre, ce point d'attache est décalé angulairement d'un angle légèrement différent de 180° par rapport à l'autre point d'attache de même polarité.

Pratiquement, l'ensemble du support formé par la combinaison des secteurs métalliques et de la metière isolante a une forme générale de disque.

La matière isolante comporte également des échancrures radiales admettant la même direction moyenne que les échancrures des secteurs métalliques, les bords des échancrures de la matière isolante étant en retrait par rapport à ceux des secteurs métalliques ; de préférence, au moins un bord de chaque échancrure de la matière isolante comporte un becquet, faisant saillie transversalement en direction de l'échancrure du secteur métallique, en vue de blocage du balai associé.

Avantageusement, à chaque balai est associé un ressort d'application du balai contre le collecteur, ce ressort comprenant une partie en hélice destinée à être logée dans une ouverture prévue dans le support et décalée angulairement par rapport à la ligne moyenne de l'échancrure destinée à recevoir le balai associé au ressort, ladite partie en hélice étant munie, à une extrémité, d'un bras s'étendant sensiblement tangentiellement et propre à prendre appui contre la face d'extrémité transversale du balai éloignée du collecteur, tandis que l'autre extrémité de l'hélice du ressort est propre à venir en appui contre une zone de butée de l'ouverture du support servant de logement au ressort. On prévoit avantageu sement sur la matière isolante au moins un cran, associé à chaque ressort, faisant saillie suivant une direction orthogonale au plan moyen du support, et propre à maintenir le bras du ressort écarté de la face transversale d'extrémité du balai, en vue de faciliter le montage du dispositif porte-balais sur la machine, le bras du resort étant ensuite libéré du cran après montage pour exercer son effort d'application sur le balai.

Le cran associé à chaque ressort peut être disposé de manière à retenir le bras du ressort par coincement en bout de ce bras.

Le dispositif porte-balais est avantageusement réalisé par surmoulage de matière plastique isolante sur des secteurs métalliques découpés dans une plaque en laiton.

De préférence, le dispositif porte-balais est symétrique par rapport à son plan moyen de telle sorte qu'il peut convenir à une machine électrique tournant dans le sens horaire ou dans le sens anti-horaire.

La matière isolante recouvrant les secteurs métalliques peut comporter une fenêtre propre à laisser apparente une zone destinée à être reliée à la masse, notamment pour assurer le retour d'un montage anti-parasitage, lorsque le dispositif est mis en place dans la machine tournante.

L'invention est également relative à une machine électrique tournante équipée d'un dispositif porte-balais tel que défini précédemment.

De préférence, ce dispositif porte-balais est monté en bout du carter de la machine entre ce carter et un fond destiné à fermer le carter. Ce dernier comporte une échancrure, munie d'un bague isolante, pour le passage des conducteurs de liaison des secteurs métalliques aux pôles ou bornes associés. De part et d'autre de cette échancrure, le carter peut comporter une dent en saillie suivant la direction longitudinale propre à venir en contact avec la zone apparente du secteur métallique définie précédemment, pour assurer le retour à la masse. Le couvercle de fermeture du carter peut être métallique et comporter, dans la zone angulaire correspondant aux balais et à leur conducteur souple de liaison, des patins de matière isolante prévus sur la face interne du couvercle.

Avantageusement, les susdits secteurs métalliques destinés à être reliés aux pôles électriques, comprennent, chacun, une zone reliée à la majeure partie du secteur par des attaches susceptibles d'être rompues si on le souhaite, afin d'assurer une séparation complète de ladite zone par rapport à la majeure du secteur, des ouvertures étant notamment prévues dans la matière isolante recouvrant les secteurs métalliques, au niveau de ces attaches, chaque conducteur électrique, destiné à être relié à un pôle et associé à un secteur étant branché sur la zone mentionnée ci-dessus de ce secteur. Lorsque l'on souhaite mettre en place des moyens d'anti-parasitage, on provoque la rupture de ces attaches de manière à séparer chaque zone du restant du secteur, et on branche les moyens d'anti-parasitage entre la susdite zone séparée et le reste du secteur métallique correspondant.

L'invention consiste, mises à part les dispositions exposées ci-dessus, en un certain nombre d'autres dispositions dont il sera plus explicitement question ci-après à propre de modes de réalisation particuliers décrits avec référence aux dessins ci-annexés, mais qui ne sont nullement limitatifs.

La figure 1, de ces dessins, est une vue en plan d'un dispositif porte-balais, conforme à l'invention, sans moyens d'anti-parasitage, et prévu pour un sens de rotation donné du moteur.

La figure 2 est une vue semblable à la figure 1 du même dispositif adapté pour une rotation du moteur en sens inverse du cas prévu pour la figure 1, avec antiparasitage.

La figure 3 représente un détail, à plus grande échelle, de la figure 1.

La figure 4 est une vue partielle suivant IV-IV, figure 3.

La figure 5 est une vue partielle en élévation d'un couvercle pour la fermeture d'un carter de moteur électrique.

La figure 6 est une vue en élévation de l'extrémité d'un carter de moteur électrique sur laquelle le dispositif porte-balais est en cours de montage.

La figure 7, enfin, est une vue retournée en plan des secteurs du dispositif de la figure 1, avant surmoulage, les secteurs étant reliés mécaniquement en des points d'attache destinés à être rompus ultérieurement.

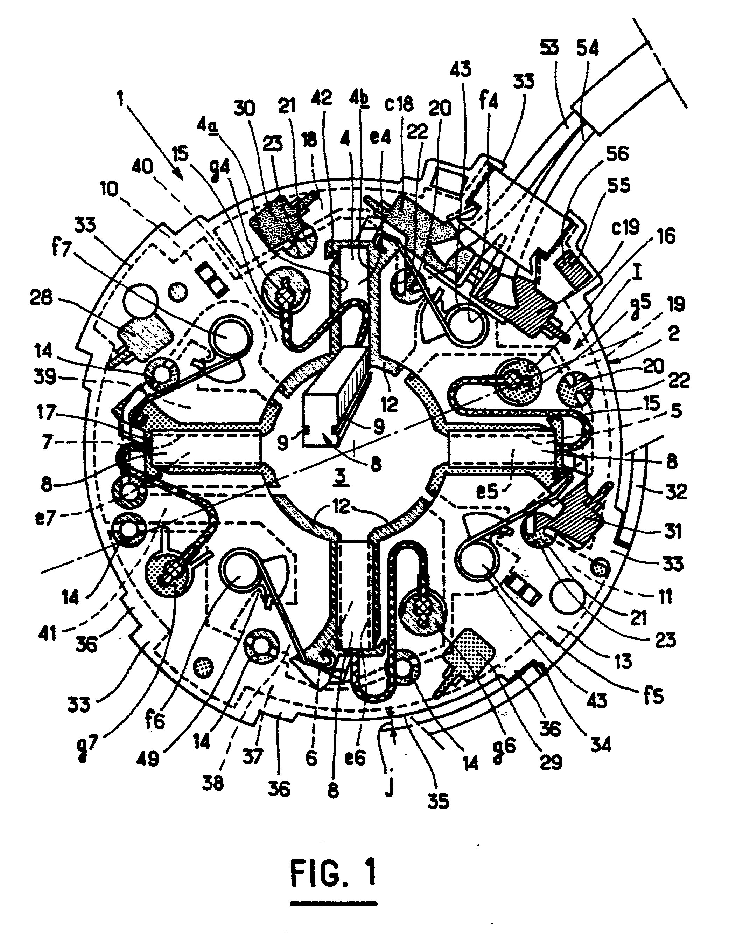

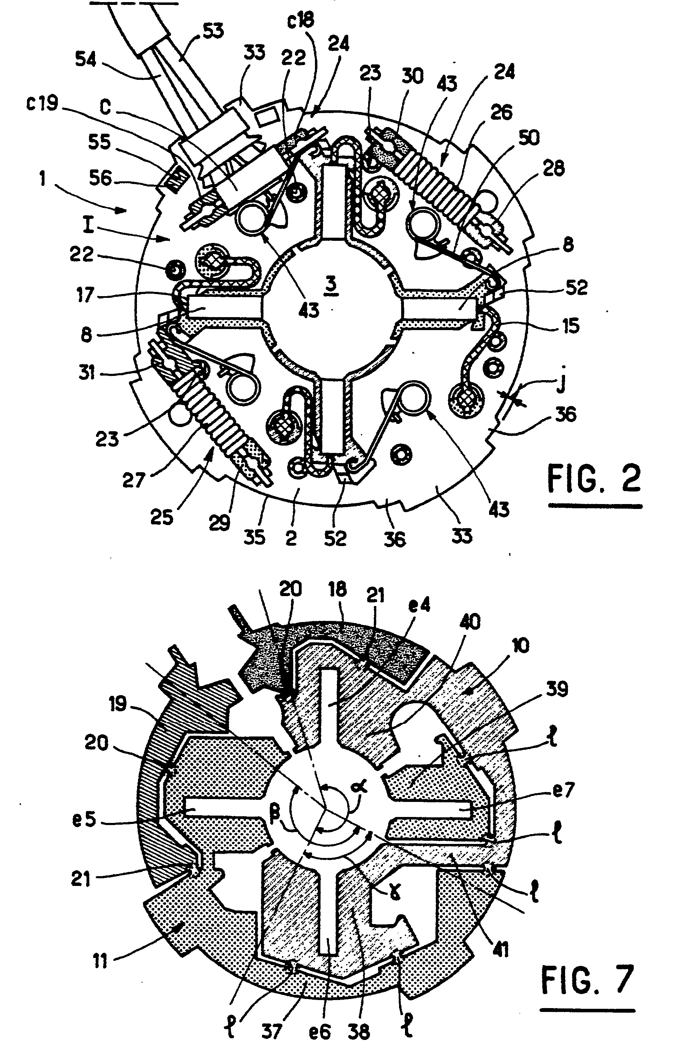

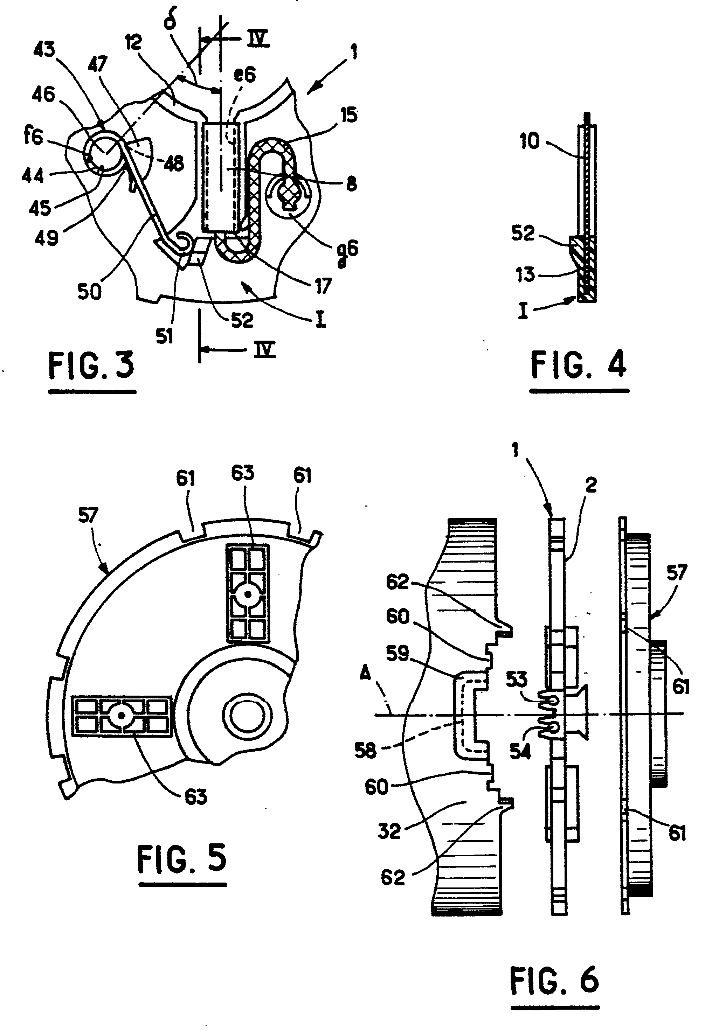

En se rapportant aux dessins, notamment à la figure 1, on peut voir un dispositif porte-balais pour une machine électrique tournante à collecteur, notamment pour un moteur électrique. Le dispositif 1 comprend un support 2 en forme de plaque dont le plan moyen est destiné à être maintenu sensiblement orthogonalement à l'axe A (figure 6) de la machine. La plaque constituant le support 2 est de préférence à contour sensiblement circulaire et se présente sous la forme d'un disque ajouré. Le support 2 comporte une ouverture centrale 3 pour le passage du collecteur et de l'arbre (non représenté) de la machine. Ce support 2 comporte, en outre, selon l'exemple de réalisation des figures 1 et 2, quatre évidements 4, 5, 6 et 7 s'étendant radialement à partir de l'ouverture centrale 3, vers l'extérieur. L'extrémité externe de chaque évidement est fermée. La forme d'un évidement est celle d'un rectangle allongé, dont la longueur est orientée parallèlement à une direction radiale. Les bords longtudinaux tels que 4a, 4b, orientés radialement, sont destinés à servir de guidage à un balai 8 associé. Ce balai comporte, en section transversale, des gorges longitudinales 9 dans lesquels sont engagés les bords tels que 4a, 4b de chaque évidement.

Les évidements 4 à 7 sont répartis angulairement de manière régulière c'est-à-dire qu'ils sont espacés angulairement de 90°, les balais 8 associés à deux évidements diamétralement opposés étant reliés électriquement au même pôle, et isolés électriquement des deux autres balais. Dans le cas de la figure 1, on supposera que les balais associés aux deux évidements 4, 6 diamétralement opposés sont destinés à être reliés au pôle +, tandis que les balais associés aux évidements 5, 7 sont destinés à être reliés au pôle -. Il est clair que les branchements pourraient être inversés, et que l'exemple donné précédemment est simplement destiné à faciliter la description.

Le support 2 est formé par la combinaison d'au moins deux secteurs métalliques plats 10, 11, sensiblement coplanaires, séparés l'un de l'autre lorsque le dispositif est prêt à être utilisé, et dans lesquels sont prévus des échancrures radiales e4, e5, e6, e7 constituant les susdits évidements 4 à 7, et dont les bord métalliques tels que 4a, 4b constituent les organes de guidage des balais 8.

Des moyens isolants i de maintien et d'assemblage des secteurs métalliques 10 et 11 sont prévus, les susdits bords métalliques de guidage tels que 4a,4b faisant saillie par rapport aux moyens isolants. Les secteurs métalliques tels que 10, 11 peuvent également faire saillie radialement vers l'intérieur, par rapport aux moyens isolants I dans l'ouverture 3, par des parties telles que 12.

Les moyens isolants I sont avantageusement constitués par deux couches telles que 13 de matière plastique isolante, recouvrant les deux faces des secteurs métalliques tel que 10 et 11, ces deux couches 13 étant reliées l'une à l'autre, notamment à la périphérie du support 2. La mise en place de ces couches isolantes 13 est avantageusement assurée par surmoulage des secteurs métalliques tels que 10 et 11. Il est à noter que pour faciliter les opérations de surmoulage, les secteurs métalliques tels que 10 et 11, ainsi que les secteurs métalliques supplémentaires dont il sera question par la suite, peuvent être reliés les uns aux autres, comme représenté sur la figure 7, par des attaches 1 constituées par d'étroites bandes de la matière des secteurs, assurant la continuité d'un secteur à l'autre. Le surmoulage des moyens isolants I est réalisé alors que les divers secteurs métalliques restent liés les aux autres par les attaches en question qui contribuent au maintien dans un même plan de l'ensemble des secteurs. Des fenêtres ou ouvertures telles que 14, généralement de forme ciculaire, sont réservées dans la matière isolante I au droit des attaches (languettes métalliques) reliant les secteurs tels que 10 et 11 pendant le surmoulage. Lorsque l'opération de surmoulage est terminée, on coupe ces attaches à l'aide d'un poinçon ou organe équivalent, engagé dans les ouvertures telles que 14. Le dispositif représenté sur la figure 1 est à l'état achevé et les attaches entre les secteurs 10 et 11 ont toutes été brisées à travers les ouvertures 14, de telle sorte que ces deux secteurs 10 et 11 sont séparés mécaniquement et isolés électriquement l'un de l'autre.

Chaque balai 8, ou charbon, formé par un bloc de graphite ou matière équivalente conductrice de l'électricité, est relié électriquement, par un conducteur souple, de préférence une tresse métallique 15, au secteur 10 ou 11 ayant la polarité correspondant à celle du balai considéré. Des ouvertures 16, notamment circulaires, sont prévues dans les moyens isolants I pour découvrir des zones g4, g6 d'une part, et g5, g7, d'autre part, des secteurs métalliques 10 et 11, ces zones étant associées, respectivement, aux balais 8 destinés à être engagés dans les évidements 4, 5, 6 et 7. La tresse conductrice flexible 15 associée à un balai 8 est fixée sur l'extrémité transversale 17 de ce balai 8 éloignée radialement du centre du dispositif 1. L'autre extrémité de la tresse 15 est soudée sur la zone g4, g5, g6 ou g7 associée. Les tresses 15 assurent donc, non seulement la liaison électrique entre le balai 8 et le secteur 10 ou 11 correspondant, mais également la liaison mécanique de ce balai 8 avec le dispositif 1. La longueur de la tresse 15 est suffisante pour permettre la mise en place du balai 8 dans l'échancrure associée avec engagement des bords de cette échancrure dans les gorges 9 du balai, et pour sortir le balai de cette échancrure si on le souhaite.

Les secteurs métalliques 10 et 11 comprennent une zone respectivement 18, 19 reliée à la majeure partie du secteur correspondant par des attaches respectivement 20, 21 au droit desquelles sont prévues, dans les moyens isolants I, des ouvertures 22, 23 semblables aux ouvertures 14 évoquées précédemment. Les attaches 20, 21 au nombre de deux pour chaque zone 18, 19 dans l'exemple considéré, sont consituées par des bandes de faible largeur reliant mécaniquement et électriquement les zones 18, 19 à la majeure partie du secteur correspondant 10, 11 de la même manière que les attaches évoquées précédemment (non visibles sur la figure 1) et qui se trouvent au niveau des ouvertures 14 avant rupture.

Lorsque le dispositif porte-balais est destiné à être utilisé sans moyen d'anti-parasitage, comme représenté sur la figure 1, les attaches 20, 21 sont conservées et assrent la liaison électrique entre la partie principale du secteur correspondant 10, 11 et le pôle respectif. Lorsque des moyens d'anti-parasitage 24, 25 connus en eux-mêmes (par exemple comprenant des bobines de self 26,27 et un condensateur C montrés sur la figure 2) sont utilisés, les attaches 20, 21 sont rompues à l'aide d'un poinçon engagé dans les ouvertures 22, 23. Cette différence apparaît bien lorsque l'on compare la représentation de la surface située à l'intérieur du contour des ouvertures 22 et 23 sur les figures 1 et 2.

Dans le cas de la figure 2, la liaison électrique entre le secteur 10, 11 et la zone 18, 19 maintenant séparée de ce secteur, est assurée par les bobines de self 26, 27 dont une extrémité est reliée électriquement, notamment par soudure, à une partie 28, 29 du secteur métallique correspondant qui reste apparente à travers une fenêtre associée ménagée dans les moyens isolants I. L'autre extrémité des bobines de self 26, 27 est reliée, notamment par soudure, à une partie 30, 31 de la zone correspondante 18, 19, qui reste apparente à travers une fenêtre correspondante prévue dans les moyens isolants I.

Le maintien en position angulaire du dispositif 1 en bout de carter 32 de la machine est assuré par des parties 33, s'étendant suivant un arc, faisant saillie radialement sur la périphérie du coutour du dispositif 1, et destinées à coopérer avec des logements correspondants 34, formés par une encoche en bout de carter. Avantageusement, quatre parties en saillie 33 décalées de 90° sont prévues à la périphérie du dispositif 1, les points milieux de ces saillies, suivant la direction périphérique, étant situés sur ou sensiblement sur les bissectrices des directions moyennes des évidements 4, 5, 6 et 7.

Le coutour 35 de la majeure partie du dispositif 1 est de préférence situé à une distance radiale j, vers l'intérieur, de la surface interne du carter 32. De part et d'autre de chaque partie en saillie 33 est prévu un épaulement 36, s'étendant suivant la direction périphérique, dont le diamètre extérieur est égal au diamètre interne du carter 32, afin d'assurer le centrage du dispositif 1 dans ce carter.

Les secteurs métalliques 10 et 11 ont une étendue angulaire moyenne, respectivement α, β, (voir figure 7), suffisante pour permettre d'assurer un branchement électrique des charbons 8 avec une longueur de tresse 15 relativement réduite. Dans l'exemple envisagé, où quatre balais 8 sont présents, l'étendue angulaire moyenne α, β de chaque secteur 10, 11 est d'environ 180°, ou supérieure à cette valeur, puisque les balais 8 de même polarité sont diamétralement opposés. Les deux secteurs 10 et 11 ont une plage angulaire commune dont l'étendue angulaire est désignée par γ sur la figure 7. Dans cette plage angulaire commune le secteur 11 présente une extension arquée 37 située à l'extérieur, dans le sens radial, de la partie 38 du secteur 10.

Les zones de fixation g4, g6 des extrémités des tresses associées aux balais des évidements 4 et 6 sont diamétralement opposées.

La zone g5 de fixation de l'extrémité de la tresse associée au balai de l'évidement 5 est décalée à 90° par rap port à g4, dans le sens des aiguilles d'une montre et est située à la même distance radiale du centre du dispositif 1. Par contre, du fait de l'imbrication des secteurs 10 et 11 comme visible sur la figure 1, la partie g7 n'est pas tout à fait diamétralement opposée à la partie g5 et est située radialement à une distance un peu plus forte du centre du disque 1. Ce léger décalage de la partie g7 par rapport à la position géométrique symétrique de g5 par rapport au centre du disque 1 n'entraîne pas de modification de la longueur de la tresse 15 associée au balai de l'évidement 7.

Le dispositif 1 comporte un troisième secteur métallique 39, noyé en partie dans les moyens isolants I, destiné à déterminer l'échancrure e7. Ce secteur métallique 39, d'étendue angulaire réduite, est compris entre la partie 38 du secteur 10, destinée à définir l'échancrure e6 et l'autre partie 40 définissant l'échancrure e4.

Dans le dispositif 1 achevé, le secteur 39 est séparé mécaniquement et est isolé électriquement du secteur 10 et du secteur 11.

Le secteur métallique 39 a donc essentiellement pour but de permettre de réaliser les bords métalliques de guidage 7a, 7b qui font saillie par rapport aux moyens isolants I. La liaison électrique du balai 8, monté dans l'évidement 7, avec le pôle correspondant, est assurée par la tresse 15 qui, en quelque sorte, enjambe dans un plan différent, au-dessus des moyens isolants I, la branche 41 du secteur 10, de polarité opposée, qui sépare le secteur 11 du secteur 39.

Les moyens isolants I comprennent, associé à chaque échancrure e4...e7, un becquet 42 (figure 1) faisant saillie en direction de l'échancrure et s'étendant en travers du bord métallique de guidage tel que 4a de manière à freiner le balai 8 dans son mouvement de coulissement, notamment en vue de faciliter le montage du dispositif autour du collecteur en retenant ce balai écarté de l'ouverture 3.

A chaque balai 8 est associé un ressort 43 d'appli cation du balai contre le collecteur (non représenté), c'est-à-dire un ressort propre à exercer sur le balai 8 un effort orienté radialement vers le centre du disque 1 et supérieur à l'effort de freinage du becquet 42. Ce ressort (voir figure 3) comprend une partie en hélice 44 dont l'axe est disposé sensiblement perpendiculairement au plan moyen du dispositif 1. La partie en hélice 44 est destinée à être logée dans une ouverture correspondante f4, f5, f6, f7 prévue dans le support 1 et décalée angulairement par rapport à la ligne moyenne de l'échancrure e4...e7 destinée à recevoir le balai associé au ressort considéré. Chaque ouverture telle que f6 comprend une partie circulaire 45 dont le centre 46 est décalé d'un angle δ (figure 3) par rapport à la ligne moyenne de l'échancrure e6 associée. Le décalage du centre 46 est effectué, par rapport à la ligne moyenne de l'échancrure e6, du côté opposé au point ou zone d'attache g6 de la tresse 15 associée à la même échancrure. En outre, l'ouverture 45 est située angulairement entre l'échancrure e6 et le point ou zone d'attache associée à l'échancrure suivante. L'ouverture f6 comprend, en outre, une lumière 47 en forme d'arc, située radialement à l'extérieur de la partie 45 et communiquant avec cette partie 45 par un passage 48 dont l'étendue angulaire est inférieure à celle de la lumière 47. Une sorte de bec 49, faisant saillie vers l'intérieur de l'ouverture f6 ou de l'une des autres ouvertures f4, f5, f7, est ainsi formé. Il est à noter que la découpe du contour des secteurs métalliques 10, 11 est avantageusement prévue pour présenter un bec correspondant à ce bec 49 de manière à venir renforcer la partie de matière isolante.

La partie en hélice 44 d'un ressort 43 est munie, à une extrémité, d'un bras 50 s'étendant sensiblement tangentiellement par rapport au contour de l'hélice et donc par rapport au contour de la partie circulaire 45. Ce bras 50 est propre à prendre appui, par son extrémité recourbée 51, éloignée de l'hélice 44, contre la face d'extrémité transversale 17 du balai éloignée du collecteur.

L'autre extrémité de l'hélice 44 du ressort forme un crochet et est propre à venir en appui contre une zone de butée, formée par le bec 49, de l'ouverture associée telle que f4 du support 1. La partie en hélice 44 du ressort travaille en torsion dans un sens tel que l'extrémité du bras 50 exerce, sur le balai 8, un effort de rappel suivant la direction radiale, vers le centre du dispositif 1.

On prévoit sur la matière isolante au moins un cran 52 associé à chaque ressort 43 et donc à chaque ouverture f4...f7. Ce cran 52 fait saillie suivant une direction orthogonale au plan moyen du support 1 et est propre à maintenir le bras 50, du ressort associé, écarté de la face transversale 17 d'extrémité du balai en vue de faciliter le montage du dispositif porte-balais 1 sur la machine. Après mise en place du dispositif 1, le bras 50 du ressort est libéré du cran 52 et vient exercer son effort d'application sur la face 17 du balai 8.

Avantageusement, le cran 52, comme mieux visible sur la figure 3, est disposé de manière à retenir le bras 50 par coincement en bout de ce bras. L'extrémité 51, en forme de boucle, est retenue par une face du cran 52 sensiblement orthogonale au plan moyen du support 1 et orientée de manière à assurer l'effet de coincement. Le bras 50 peut être dégagé du cran 52 par un mouvement écartant ce bras 50 du support 1, suivant une direction orthogonale à ce support.

Des conducteurs souples 53, 54 assurent la liaison électrique respectivement des zones 18, 19 avec les pôles correspondants. Une extrémité dénudée de chaque conducteur 53,54 est soudée en un point de la zone correspondante 18, 19, l'autre extrémité (non représentée) de chaque conducteur étant munie d'un élément de connexion. Les zones 18 et 19 sont situées de part et d'autre du rayon moyen de la partie en saillie 33 qui est sensiblement diamétralement opposée à la zone g7 et qui est pratiquement comprise angulairement entre les bords extrêmes, écartés l'un de l'autre, des secteurs 10 et 11. La fixation des extrémités des conducteurs 53 et 54 sur les zones 18 et 19 est réalisée de telle sorte que ces conducteurs soient situés sensiblement au milieu de la partie en saillie correspondante 33.

Des fenêtres sont ménagées dans les moyens isolants I, d'un côté au moins des zones 18 et 19 de manière à laisser apparentes des surfaces métalliques c18, c19 de chaque zone, voisines l'une de l'autre tout en étant séparées électriquement et mécaniquement. Ces surfaces c18, c19 permettent, dans le cas où les moyens d'anti-parasitage sont montés, de fixer par soudage, sur ces surfaces, les bornes d'un condensateur C d'anti-parasitage (voir figure 2).

La matière isolante recouvrant les secteurs métalliques comporte du côté du secteur 11 relié au pôle - , une fenêtre telle que 55 propre à laisser apparente, sur chaque face du support, une zone 56, de forme rectangulaire dans l'exemple représenté, destinée à être reliée à la masse. Cette zone 56 est située au voisinage du contour de la saillie 33 traversé par les conducteurs 53, 54. Cette zone 56 appartient à la zone 19 et permet, lorsqu'elle est reliée à la masse, d'assurer le retour d'un montage anti-parasitage mis en place dans la machine tournante.

Le dispositif porte-balais 1 est monté en bout du carter 32 de la machine, comme visible sur la figure 6, entre ce carter et un fond 57 de fermeture. Le carter 32 comporte une échancrure 58 munie d'une bague isolante 59 ou passe-fil, pour le passage des conducteurs de liaison 53, 54.

De part et d'autre de l'échancrure 58, le carter 32 comporte une dent 60 à contour rectangulaire, en saillie suivant la direction longitudinale. L'une de ces dents 60 est propre à venir en contact, par son bord d'extrémité transversale, avec la zone 56 située sur la face en regard du dispositif porte-balais. Du fait que ce dispositif peut être retourné, selon le sens de rotation de la machine, la zone 56 peut se trouver d'un côté ou de l'autre de l'échancrure 58. Dans tous les cas un contact sera établi avec l'une des dents 60 pour assurer le retour à la masse.

Le fond ou couvercle 57 de fermeture du carter est constitué par une sorte de disque métallique comportant, à sa périphérie, des échancrures 61 destinées à recevoir des languettes 62 en saillie longitudinale prévues en bout du carter. Les languettes 62 sont rabattues à angle droit vers le centre pour assurer le maintien du couvercle 57 sur le carter 32.

Le couvercle 57 comporte, sur sa face interne, dans chaque zone angulaire correspondant à un balai 8, un patin 63 (figure 5) en matière isolante, fixé notamment par sertissage, propre à isoler le couvercle de la tresse 15 associée au balai 8.

L'ensemble formé par les secteurs métalliques 10, 11, 39 et les moyens isolants I surmoulés admet un plan de symétrie perpendiculaire à l'axe du disque. Selon le sens de rotation horaire,ou anti-horaire, de la machine à laquelle est destiné le dispositif porte-balais, le support 1 peut être retourné de manière à présenter une face,ou l'autre, au carter 32.

Le montage et la mise en place du dispositif porte-balais dans la machine résultent immédiatement des explications précédentes sans qu'il soit utile d'insister à ce sujet.

Le guidage en coulissement des balais 8 est assuré par des bords métalliques, avec un frottement minimum. L'isolation électrique des secteurs métalliques est assurée dans de bonnes conditions. La réalisation du dispositif par surmoulage de la matière isolante est simplifiée du fait que les secteurs métalliques sont dans un même plan et réunis par des points d'attache. Ces secteurs peuvent être obtenus au cours d'une seule opération de matriçage d'une plaque métallique , notamment en laiton.

Un même dispositif porte-balais peut convenir à un montage sans anti-parasitage ou à un montage avec anti-parasitage au prix d'un minimum de modifications.

Un tel dispositif porte-balais convient en particulier pour un moteur électrique de système de refroidissement sur véhicule automobile.

## Revendications

1. Dispositif porte-balais pour machine électrique tournante à collecteur, à au moins quatre balais, les balais successifs ayant des polarités opposées, comprenant un support (2) en forme de plaque dont le plan moyen est destiné à être maintenu sensiblement orthogonalement à l'axe (A) de la machine, ce support comportant une ouverture centrale (3) pour le passage du collecteur, et au moins quatre évidements (4, 5, 6, 7) s'étendant radialement à partir de l'ouverture centrale (3) vers l'extérieur, l'extrémité externe de ces évidements étant fermée, les bords orientés radialement, de chaque évidement, étant destinés à servir de guidage à un balai (8) associé qui comporte, en général, des gorges (9) dans lesquelles sont engagés les susdits bords, les balais de polarité électrique opposée étant isolés électriquement l'un de l'autre, caractérisé par le fait que le support (2) comporte au moins trois secteurs métalliques (10, 11 39) sensiblement coplanaires, séparés l'un de l'autre dans lesquels sont prévues quatre échancrures (e4, e5, e6, e7) dont les bords métalliques (4a, 4b...) constituent des organes de guidage des balais, deux (10, 11) de ces secteurs étant reliés à des conducteurs électriques (53, 54) destinés au branchement des deux pôles opposés, tandis que le ou les autres secteurs métalliques (39) sont séparés et isolés de ces deux premiers secteurs (10, 11), chaque balai (8) étant relié électriquement, par un conducteur souple (15), à un point (g4, g5, g6, g7) de celui des deux premiers secteurs considérés, ayant la même polarité que le balai, des moyens isolants (I) de maintien et d'assemblage des secteurs métalliques étant prévus, les susdits bords de guidage (4a, 4b...) orientés radialement faisant saillie transversalement par rapport aux moyens isolants (I).

2. Dispositif selon la revendication 1 caractérisé par le fait que chaque balai (8) est relié électriquement par un conducteur souple (15), notamment une tresse, au secteur métallique associé (10, 11), une extrémité du conducteur souple (15) étant fixée sur le balai, tandis que l'autre extrémité est fixée sur le secteur métallique.

3. Dispositif selon la revendicaiton 1 ou 2 caractérisé par le fait que les secteurs métalliques plats (10, 11, 39) du support sont munis, sur leurs deux faces, de matière isolante, des zones (g4, g5, g6, g7 ; 28, 29 ; 30, 31 ; c18, c19) de ces secteurs métalliques restant apparentes, notamment pour permettre d'effectuer des branchements électriques.

4. Dispositif selon la revendication 1 caractérisé par le fait que les susdits secteurs métalliques (10, 11) destinés à être reliés aux pôles électriques, comprennent, chacun, une zone (18, 19) reliée à la majeure partie du secteur par des attaches (20, 21) susceptibles d'être rompues si on le souhaite, afin d'assurer une séparation complète de ladite zone (18, 19) par rapport à la majeure partie du secteur (10, 11), des ouvertures (22, 23) étant notamment prévues dans la matière isolante recouvrant les secteurs métalliques, au niveau de ces attaches, chaque conducteur électrique (53, 54), destiné à être relié à un pôle et associé à un secteur étant branché sur la zone (18, 19) mentionnée ci-dessus de ce secteur.

5. Dispositif selon la revendication 4 caractérisé par le fait que les attaches (20, 21) sont rompues et que des moyens d'anti-parasitage (26, 27) sont branchés entre la susdite zone (18, 19) séparée, et le reste·du secteur métallique (10, 11) correspondant.

6. Dispositif selon l'une quelconque des revendications précédentes caractérisé par le fait que les deux secteurs (10, 11) reliés aux pôles opposés ont une étendue angulaire suffisante pour permettre le branchement électrique de balais (8) de même polarité à l'aide de conducteurs souples (15) de longueur relativement réduite.

7. Dispositif selon la revendication 6 caractérisé par le fait que dans le cas d'un montage à quatre balais (8) régulièrement répartis à 90°, chaque secteur métallique (10, 11) relié à un pôle s'étend sur un peu plus de 180°, les deux secteurs ayant une plage angulaire commune ($\gamma$) dans laquelle l'un des secteurs (11) est situé radialement à l'extérieur par rapport à l'autre (10), l'un au moins (g7) des points d'attache sur l'un (11) des secteurs métalliques, pour les conducteurs souples (15) des balais, étant situé radialement à une distance de l'axe différente de celle des autres points d'attache (g4, g5, g6), notamment à une distance supérieure, ce point d'attache (g7) étant en outre décalé angulairement d'un angle légèrement différent de 180° par rapport à l'autre point d'attache (g5) de même polarité.

8. Dispositif selon l'une quelconque des revendications précédentes caractérisé par le fait que la matière isolante (I) comporte également des échancrures radiales admettant la même direction moyenne que les échancrures (e4... e7) des secteurs métalliques, les bords des échancrures de la matière isolante étant en retrait par rapport à ceux des secteurs métalliques, au moins un bord de chaque échancrure de la matière isolante comportant un becquet (42) faisant saillie transversalement en direction de l'échancrure du secteur métallique.

9. Dispositif selon l'une quelconque des revendications précédentes dans lequel à chaque balai est associé un ressort (43) d'application du balai contre le collecteur, ce ressort comprenant une partie en hélice (44) destinée à être logée dans une ouverture (f4...f7) prévue dans le support et décalée angulairement par rapport à la ligne moyenne de l'échancrure (e4...e7) destinée à recevoir le balai associé au ressort, ladite partie en hélice (44) étant munie, à une extrémité, d'un bras (50) s'étendant sensiblement tangentiellement et propre à prendre appui contre la face (17) d'extrémité transversale du balai éloignée du collecteur, tandis que l'autre extrémité de l'élice du ressort est propre à venir en appui contre une zone de butée (49) de l'ouverture du support servant de logement au ressort caractérisé par le fait que sur la matière isolante est prévu au moins un cran (52), associé à chaque ressort (8), faisant saillie suivant une direction othogonale au plan moyen du support, et propre à maintenir le bras (50) du ressort écarté de la face (17) transversale d'extrémité du balai, en vue de faciliter le montage du dispositif porte-balais sur la machine, le bras (50) du ressort étant ensuite libéré du cran après montage pour exercer sont effort d'application sur le balais.

10. Dispositif selon la revendication 9 caractérisé par le fait que le cran (52) associé à chaque ressort (8) est disposé de manière à retenir le bras (50) du ressort par coincement en bout (51) de ce bras.

11. Dispositif selon l'une quelconque des revendications précédentes caractérisé par le fait qu'il est symétrique par rapport à son plan moyen de telle sorte qu'il peut convenir à une machine électrique tournant dans le sens horaire ou dans le sens anti-horaire.

12. Dispositif selon l'une quelconque des revendications précédentes caractérisé par le fait que la matière isolant recouvrant les secteurs métalliques comporte une fenêtre (55) propre à laisser apparente une zone (56) destinée à être reliée à la masse, notamment pour assurer le retour d'un montage anti-parasitage, lorsque le dispositif est mis en place dans la machine tournante.

13. Machine électrique tournante caractérisée par le fait qu'elle est équipée d'un dispositif porte-balais selon l'une quelconque des revendications 1 à 12.

14. Machine électrique tournante selon la revendication 14 dans laquelle le dispositif porte-balais est monté en bout du carter (32), entre ce carter (32) et un fond (57), la matière isolante de ce dispositif porte-balais, qui recouvre les secteurs métalliques comportant une fenêtre (55) propre à laisser apparente une zone (56) destinée à être reliée à la masse, notamment pour assurer le retour d'un montage anti-parasitage, caractérisée par le fait que le carter (32) comporte, de part et d'autre d'une échancrure (58) pour le passage des conducteurs de liaison, une dent (60) en saillie suivant la direction longitudinale propre à venir en contact avec la zone apparente (56) du secteur métallique (11) pour assurer le retour à la masse.

15. Machine électrique selon la revendication 13 ou 14 caractérisée par le fait que le couvercle de fermeture (57) est métallique et comporte, dans les zones angulaires correspondant aux balais (8) et à leur conducteur souple de liaison (15), des patins (63) de matière isolante prévus sur la face interne du couvercle.

**Claims**

1. A brush holder arrangement for a rotating electrical machine of the commutator type having at least four brushes, the successive brushes being of opposite polarities, the brush holder arrangement comprising a support (2) in the form of a plate, the mean plane of which is arranged to be maintained substantially orthogonally to the axis (A) of the machine, the said support having a central opening (3) for the commutator to pass through it, and at least four apertures (4, 5, 6, 7) extending radially from the central opening (3) towards the outside, with the outer end of the said apertures being closed, the radially orientated edges of each aperture being adapted to serve for the guidance of an associated brush (8) which, in general, includes grooves (9) in which the above mentioned edges are engaged, and the brushes of opposite electrical polarity being insulated electrically from each other, characterised by the fact that the support (2) comprises at least three metallic sectors (10, 11, 39) which are substantially coplanar with each other, which are separated from each other, and in which there are provided four slots (e4, e5, e6, e7), the metallic edges (4a, 4b ...) of which constitute elements for the guidance of the brushes, with two (10, 11) of the said sectors being connected to electrical conductors (53, 54) which are adapted for the supply of the two opposed poles, while the other metallic sector or sectors (39) are separated and insulated from the two first said sectors (10, 11), each brush (8) being electrically connected, through a flexible conductor (15), to a point (g4, g5, g6, g7) of each of the two said first sectors respectively, having the same polarity as the brush, there being further provided insulating means (I) for holding and assembling the metallic sectors together, the above mentioned radially orientated guide edges (4a, 4b ...) projecting transversely with respect to the said insulating means (I).

2. A brush holder arrangement according to Claim 1, characterised by the fact that each brush (8) is connected electrically through a flexible conductor (15), in particular a braid, to the associated said metallic sector (10, 11), with one end of the flexible conductor (15) being secured to the brush while the other end is secured to the metallic sector.

3. A brush holder arrangement according to Claim 1 or Claim 2, characterised by the fact that the flat metallic sectors (10, 11, 39) of the support are provided on both of their faces with insulating material, leaving zones (g4, g5, g6, g7; 28, 29; 30, 31; c18, c19) of the said metallic sectors exposed, in particular so as to allow electrical connections to be made.

4. A brush holder arrangement according to Claim 1, characterised by the fact that each of those of the above mentioned metallic sectors (10, 11) which are adapted to be connected to the electrical poles comprises a zone (18, 19) connected to the major portion of the sector by means of joints such that they can be ruptured at will so as to separate the said zone (18, 19) completely from the major portion of the sector (10, 11), with openings (22, 23) being in particular provided in the insulating material with which the metallic sectors are covered in the region of the said joints, each electrical conductor (53, 54) which is adapted to be connected to a pole, and which is associated with a sector, being connected to the zone (18, 19) of the said sector mentioned above.

5. A brush holder arrangement according to Claim 4, characterised by the fact that the joints (20, 21) are ruptured, and that antiparasitic means (26, 27) are connected between the above mentioned separated zone (18, 19) and the remainder of the corresponding metallic sector (10, 11).

6. A brush holder arrangement according to any one of the preceding Claims, characterised by the fact that the two sectors (10, 11) which are connected to opposite poles have a sufficiently large circumferential extent to permit the electrical connection of the brushes (8) of the same polarity as each other, by means of flexible conductors (15) of relatively reduced length.

7. A brush holder arrangement according to Claim 6, characterised by the fact that, where there are four brushes (8) spaced apart regularly at 90 degrees, each metallic sector (10, 11) which is connected to a pole extends over slightly more than 180 degrees, the two sectors having a common angular region ($\gamma$) in which one of the sectors (11) is situated radially outwardly of the other (10), at least one (g7) of the points at which the flexible conductors (15) from the brushes are attached on one (11) of the metallic sectors being situated radially at a distance from the axis different from that of the other points of attachment (g4, g5, g6), in particular at a greater distance, the said attachment point (g7) also being offset angularly by an angle slightly different from 180 degrees with respect to the other attachment point (g5) having the same polarity.

8. A brush holder arrangement according to any one of the preceding Claims, characterised by the fact that the insulating material (I) further includes radial slots extending in the same mean direction as the slots (e4 ... e7) of the metallic sectors, the edges of the said slots in the insulating material being behind those of the metallic sectors, and at least one edge of each said slot in the insulating material having a nib (42) which projects transversely towards the slot in the metallic sector.

9. A brush holder arrangement according to any one of the preceding Claims, in which a spring (43) is associated with each brush for applying the brush against the commutator, the said spring including a helical portion (44) adapted to be lodged in an opening (f4 ... f7) which is provided in the support and which is offset angularly with respect to the mean line of the slot (e4 ... e7) that is adapted to receive the brush associated with the spring, the said helical portion (44) being provided at one end with an arm (50) which extends substantially tangentially and which is arranged to engage against the transverse end face (17) of the brush which is remote from the collector, while the other end of the helix of the spring is arranged to come into engagement against an abutment zone (49) of the opening in the support which serves to locate the spring, characterised by the fact that, on the insulating material, there is provided at least one tooth (52), associated with each spring (8) and projecting in a direction which is orthogonal to the mean plane of the support, for maintaining the arm (50) of the spring spaced away from the transverse end face (17) of the brush, so as to facilitate the assembly of the brush holder arrangement on to the machine, the arm (50) of the spring being then released from the tooth after assembly whereby to exert its applied force on the brush.

10. A brush holder arrangement according to Claim 9, characterised by the fact that the tooth (52) associated with each spring (8) is disposed in such a way as to retain the arm (50) of the spring by engagement with the end (51) of the said arm.

11. A brush holder arrangement according to any one of the preceding Claims, characterised by the fact that it is symmetrical with respect to its mean plane, in such a way that it may be applied to an electrical machine which rotates in the clockwise direction or in the counter-clockwise direction.

12. A brush holder arrangement according to any one of the preceding Claims, characterised by the fact that the insulating material with which the metallic sectors are covered includes a window (55) adapted to leave exposed a zone (56) which is arranged to be connected to earth, in particular to enable an antiparasitic means to be connected when the brush holder arrangement is assembled in the rotating machine.

13. A rotating electrical machine, characterised by the fact that it is equipped with a brush holder arrangement in accordance with any one of Claims 1 to 12.

14. A rotating electrical machine according to Claim 13, in which the brush holder arrangement is mounted at the end of the casing (32), between the said casing (32) and a base member (57), with the insulating material of the said brush holder arrangement, with which the metallic sectors are covered, including a window (55) adapted to leave exposed a zone (56) which is arranged to be connected to earth, in particular to enable an antiparasitic means to be connected, characterised by the fact that the casing (32) includes, on either side of a slot (58) through which connecting conductors pass, a tooth (60) projecting in the longitudinal direction so as to come into contact with the exposed zone (56) of the metallic sector (11), whereby to effect the electrical connection to earth.

15. An electrical machine according to Claim 13 or Claim 14, characterised by the fact that the closure cover (57) is of metal, and includes, in the angular zones corresponding to the brushes (8) and to their flexible connecting conductors (15), pads (63) of insulating material which are arranged on the inner face of the cover.

## Patentansprüche

1. Bürstenträgervorrichtung für elektrische Rotationsmaschine mit wenigstens vier Bürsten, wobei die aufeinanderfolgenden Bürsten entgegengesetzte Polaritäten aufweisen, mit einem Träger (2) in Form einer Platte, deren Mittelebene dazu bestimmt ist, im wesentlichen orthogonal zur Achse (A) der Maschine festgehalten zu werden, wobei dieser Träger eine Mittelöffnung (3) für den Durchtritt des Kollektors aufweist und wenigstens vier Aussparungen (4, 5, 6, 7) radial von der Mittelöffnung (3) nach außen hin verlaufen, wobei das äußere Ende dieser Aussparungen geschlossen ist und die radial ausgerichteten Ränder jeder Aussparung dazu bestimmt sind, als Führung für eine zugehörige Bürste (8) zu dienen, die im allgemeinen Rillen (9) enthält, worin die genannten Ränder eingreifen, während die Bürsten entgegengesetzter elektrischer Polarität voneinander elektrisch getrennt sind, dadurch gekennzeichnet, daß der Träger (2) wenigstens drei im wesentlichen koplanare Metallsektoren (10, 11, 39) aufweist, die voneinander getrennt sind und worin vier Aussparungen (e4, e5, e6, e7) vorgesehen sind, deren Metallränder (4a, 4b...) Organe zur Führung der Bürsten bilden, während zwei (10, 11) dieser Sektoren mit elektrischen Leitern (53, 54) verbunden sind, die für den Anschluß der beiden entgegengesetzten Pole bestimmt sind, während der oder die andere(n) Metallsektor(en) (39) von diesen beiden ersten Sektoren (10, 11) getrennt und dagegen isoliert sind, wobei jede Bürste (8) über einen flexiblen Leiter (15) elektrisch mit einem Punkt (g4, g5, g6, g7) desjenigen der beiden ersten Sektoren verbunden ist, der die gleiche Polarität aufweist wie die Bürste, während Isoliermittel (I) zur Halterung und Zusammensetzung der Metallsektoren vorgesehen sind und die vorgenannten, radial ausgerichteten Führungsränder (4a, 4b...) quer zu den Isoliermitteln (I) vorspringen.

2. Vorrichtung nach Anspruch 1, dadurch gekennzeichnet, daß jede Bürste (8) über einen flexiblen Leiter (15), insbesondere eine Litze, elektrisch mit dem zugehörigen Metallsektor (10, 11) verbunden ist, wobei ein Ende des flexiblen Leiters (15) an der Bürste befestigt ist, während das andere Ende am Metallsektor angebracht ist.

3. Vorrichtung nach Anspruch 1 oder 2, dadurch gekennzeichnet, daß die flachen Metallsektoren (10, 11, 39) des Trägers auf beiden Seiten mit Isolierstoff versehen sind, wobei Zonen (g4, g5, g6, g7; 28, 29; 30, 31; c18, c19) dieser Metallsektoren freibleiben, um elektrische Anschlüsse vorzunehmen.

4. Vorrichtung nach Anspruch 1, dadurch gekennzeichnet, daß die vorgenannten Metallsektoren (10, 11), die an die elektrischen Pole angeschlossen werden sollen, jeweils eine Zone (18, 19) enthalten, die mit dem größeren Teil des Sektors mittels Laschen (20, 21) verbunden sind, die auf Wunsch unterbrochen werden können, um eine vollständige Trennung der genannten Zone (18, 19) vom größeren Teil des Sektors (10, 11) zu bewirken, wobei Öffnungen (22, 23) insbesondere im Isolierstoff auf den Metallsektoren in Höhe dieser Laschen vorgesehen sind und wobei jeder elektrische Leiter (53, 54) dazu bestimmt ist, an einem Pol angeschlossen und einem Sektor zugeordnet zu werden, der mit der oben erwähnten Zone (18, 19) dieses Sektors verbunden ist.

5. Vorrichtung nach Anspruch 4, dadurch gekennzeichnet, daß die Laschen (20, 21) unterbrochen sind und daß zwischen der vorgenannten separaten Zone (18, 19) und dem Rest des entsprechenden Metallsektors (10, 11) Entstörmittel (26, 27) eingesetzt sind.

6. Vorrichtung nach einem der vorherigen Ansprüche, dadurch gekennzeichnet, daß die beiden mit den gegenüberliegenden Polen verbundenen Sektoren (10, 11) eine Winkelabmessung haben, die ausreicht, um den elektrischen Anschluß der Bürsten (8) gleicher Polarität mit Hilfe von flexiblen Leitern (15) von relativ geringer Länge zu ermöglichen.

7. Vorrichtung nach Anspruch 6, dadurch gekenneichnet daß im Falle einer Schaltung mit vier Bürsten (8), die gleichmäßig im Winkel von 90° verteilt sind, jeder mit einem Pol verbundene Metallsektor (10, 11) sich über etwas mehr als 180° erstreckt, wobei die beiden Sektoren einen gemeinsamen Winkelbereich (γ) aufweisen, worin einer der Sektoren (11) radial außerhalb des anderen Sektors (10) angeordnet ist, während wenigstens einer der Befestigungspunkte (g7) an einem (11) der Metallsektoren für die flexiblen Leiter (15) der Bürsten radial in einer Entfernung zur Achse angeordnet ist, die von derjenigen der anderen Befestigungspunkte (g4, g5, g6) abweicht, insbesondere in einer größeren Entfernung, wobei dieser Befestigungspunkt (g7) außerdem um einen Winkel versetzt ist, der im Verhältnis zu dem anderen Befestigungspunkt (g5) der gleichen Polarität leicht von 180° abweicht.

8. Vorrichtung nach einem der vorherigen Ansprüche, dadurch gekennzeichnet, daß der Isolierstoff (I) auch radiale Aussparungen aufweist, die die gleiche mittlere Richtung ermöglichen wie die Aussparungen (e4... e7) der Metallsektoren, während die Ränder der Aussparungen im Isolierstoff gegenüber den Rändern der Metallsektoren zurückspringen, wobei wenigstens ein Rand jeder Aussparung im Isolierstoff einen Schnabel (42) besitzt, der quer in Richtung der Aussparung des Metallsektors vorspringt.

9. Vorrichtung nach einem der vorherigen Ansprüche, worin jeder Bürste eine Feder (43) zugeordnet ist, wodurch die Bürste an den Kollektor angedrückt wird, wobei diese Feder einen spiralförmigen Teil (44) aufweist, der in eine Öffnung (f4... f7) eingesetzt werden soll, welche im Träger vorgesehen ist und eine Winkelverschiebung im Verhältnis zur Mittellinie der Aussparung (e4... e7) zur Aufnahme der der Feder zugeordneten Bürste vorhanden ist, während der spiralförmige Teil (44) an einem Ende mit einem Arm (50) versehen ist, der im wesentlichen tangential verläuft und auf der Quer-Abschlußfläche (17) der Bürste aufliegen kann, die vom Kollektor abgewandt ist, während das andere Ende der Federspirale geeignet ist, auf einer Anschlagzone (49) der Trägeröffnung aufzuliegen, die als Sitz für die Feder dient, dadurch gekennzeichnet, daß im Isolierstoff wenigstens eine Einkerbung (52) vorgesehen ist, die jeder einzelnen Feder (8) zugeordnet ist und in orthogonaler Richtung zur Mittelebene des Trägers vorspringt und geeignet ist, den Arm (50) der Feder von der Quer-Abschlußfläche (17) der Bürste fernzuhalten, um den Einbau der Bürstenträgervorrichtung an der Maschine zu erleichtern, so daß der Arm (50) nach dem Einbau aus der Einkerbung freikommt, um seine Wirkung auf die Bürste auszuüben.

10. Vorrichtung nach Anspruch 9, dadurch gekennzeichnet, daß die jeder Feder (8) zugeordnete Einkerbung (52) so angeordnet ist, daß der Arm (50) der Feder durch Klemmung am Ende (51) dieses Arms festgehalten wird.

11. Vorrichtung nach einem der vorherigen Ansprüche, dadurch gekennzeichnet, daß sie zur Mittelebene symmetrisch ist, so daß sie sich für eine elektrische Maschine eignet, die im Uhrzeigersinn oder gegen den Uhrzeigersinn rotiert.

12. Vorrichtung nach einem der vorherigen Ansprüche, dadurch gekennzeichnet, daß der Isolierstoff zur Abdeckung der Metallsektoren ein Fenster (55) aufweist, welches eine Zone (56) freiläßt, die dazu bestimmt ist, an Masse gelegt zu werden, insbesondere um den Einbau einer Entstörvorrichtung zu ermöglichen, wenn die Vorrichtung in der rotierenden Maschine eingebaut ist.

13. Elektrische Rotationsmaschine, dadurch gekennzeichnet, daß sie mit einer Bürstenträgervorrichtung nach einem der Ansprüche 1 bis 12 ausgerüstet ist.

14. Elektrische Rotationsmaschine nach Anspruch 13, worin die Bürstenträgervorrichtung am Ende des Gehäuses (32) zwischen diesem Gehäuse (32) und einem Boden (57) angebracht ist, wobei der Isolierstoff dieser Bürstenträgervorrichtung, der die Metallsektoren abdeckt, eine Öffnung (55) aufweist, die eine Zone (56) freiläßt, die an Masse gelegt werden kann, insbesondere um den Einbau einer Entstörvorrichtung zu gewährleisten, dadurch gekennzeichnet, daß das Gehäuse (32) beiderseits einer Aussparung (58) für den Durchtritt der Verbindungsleiter einen vorspringenden Zahn (60) in Längsrichtung besitzt, der geeignet ist, mit der freiliegenden Zone (56) des Metallsektors (11) in Kontakt zu treten, um die Rückführung an Masse zu gewährleisten.

15. Elektrische Maschine nach Anspruch 13 oder 14, dadurch gekennzeichnet, daß der Verschlußdeckel (57) aus Metall besteht und in den Winkelbereichen, die den Bürsten (8) und deren flexiblen Verbindungsleitern (15) entsprechen, Schuhe (63) aus Isolierstoff besitzt, die an der Innenfläche des Deckels vorgesehen sind.

**FIG. 1**

FIG. 2

FIG. 7

**FIG. 3**

**FIG. 4**

**FIG. 5**

**FIG. 6**